# EUROPEAN PATENT APPLICATION

(11) **EP 4 650 935 A1**
(43) Date of publication of application: **19.11.2025**
(21) Application number: 24773866.9
(22) Date of filing: 26.02.2024
(51) Int. Cl.: G06F 3/14

(54) **APPLICATION INTERFACE DISPLAY METHOD AND RELATED APPARATUS**

(30) Priority: 20.03.2023 CN 202310312941
(71) Applicant: Huawei Technologies Co., Ltd., Shenzhen, Guangdong 518129 (CN)
(72) Inventor: LIU, Lei, Shenzhen, Guangdong 518129 (CN); SHAN, Chang, Shenzhen, Guangdong 518129 (CN); ZHOU, Yupei, Shenzhen, Guangdong 518129 (CN); ZHANG, Yunyi, Shenzhen, Guangdong 518129 (CN); LI, Chuangju, Shenzhen, Guangdong 518129 (CN)
(74) Representative: Maiwald GmbH
(86) International application number: PCT/CN2024/078488
(87) International publication number: WO 2024/193298

(57) **Abstract**

This application provides an application interface display method and a related apparatus. The method is applied to an electronic device. The method includes: entering a landscape hover state in response to a user operation; obtaining first display content of a target application, where the target application is an application running in a foreground, and the first display content is a part or all of content in an interface of the target application before the electronic device enters the landscape hover state; and displaying the first display content in a first area of a screen, where the first area is an area that is of the screen and that is located above a center line of a hinge in the landscape hover state, and the hinge is configured to control opening and closing of the screen. The electronic device autonomously senses and determines whether the electronic device is in the landscape hover state. In the landscape hover state, the electronic device displays the first display content of the target application by avoiding a bend of the hinge, so that viewing and an operation of a user are not affected, thereby improving user experience.

## Description

This application claims priority to Chinese Patent Application No. 202310312941.8, filed with the China National Intellectual Property Administration on March 20, 2023 and entitled "APPLICATION INTERFACE DISPLAY METHOD AND RELATED APPARATUS", which is incorporated herein by reference in its entirety.

### TECHNICAL FIELD

This application relates to the field of terminal technologies, and in particular, to an application interface display method and a related apparatus.

### BACKGROUND

With continuous development of terminal screen manufacturing technologies in terminal technologies, a growing quantity of electronic devices with foldable screens emerge. An electronic device with a foldable screen has an unfolded state, a hover state, and a folded state.

Currently, when the electronic device with the foldable screen is in a landscape hover state, most applications (applications, APPs) do not have a capability of adapting to the landscape hover state to display an application interface. Application interfaces of these applications are bent due to a folding radian of the screen. This affects viewing and/or an operation of a user on content in bent areas in the application interfaces, resulting in poor user experience.

### SUMMARY

This application provides an application interface display method and a related apparatus, to improve user experience.

According to a first aspect, this application provides an application interface display method. The method may be performed by an electronic device, or the method may be performed by a component (for example, a chip or a chip system) configured in an electronic device, or may be implemented by a logical module or software that can implement all or some functions of an electronic device. This is not limited in this application. One or more applications are installed in the electronic device.

For example, the method includes: entering a landscape hover state in response to a user operation; obtaining first display content of a target application, where the target application is an application running in a foreground, and the first display content is a part or all of content in an interface of the target application before the electronic device enters the landscape hover state; and displaying the first display content in a first area of a screen, where the first area is an area that is of the screen and that is located above a center line of a hinge in the landscape hover state, and the hinge is configured to control opening and closing of the screen.

Based on the foregoing solution, the electronic device autonomously senses and determines whether the electronic device is in the landscape hover state. In the landscape hover state, the electronic device displays the first display content of the target application by avoiding a bend of the hinge, so that viewing and an operation of a user are not affected, thereby improving user experience.

With reference to the first aspect, in some possible implementations, the first display content is the part of the content in the interface of the target application before the landscape hover state is entered, and the interface further includes a related page of the first display content and/or a control for controlling the first display content.

With reference to the first aspect, in some possible implementations, the method further includes: displaying the control in a second area of the screen, where the second area is an area that is of the screen and that is located below the hinge in the landscape hover state; or displaying a page flip control and one of the control or the related page in a second area of the screen, where the page flip control is used to control switching between the control and the related page; or displaying the related page in a second area of the screen, and displaying the control in the first area of the screen.

The second area is the area that is of the screen and that is located below the hinge in the landscape hover state. Displaying the control in the second area may avoid a hinge area, that is, avoid an area in which the screen is bent into a radian. This not only does not affect viewing of the user on an application interface, but also facilitates an operation of the user on the control. In addition, when the second area of the electronic device is placed on and parallel to a desktop, it is not likely to overturn the electronic device by performing an operation on the control displayed in the second area, thereby further improving user experience.

With reference to the first aspect, in some possible implementations, the target application includes an application for playing a video, an application for photographing or image shooting, or an application for an online conference.

For example, the application for playing a video is the target application. In a video playing scenario, the first display content is a video picture, and the control for controlling the first display content includes a video control, for example, including but not limited to a control for pausing/playing a video, a progress bar control, and a variable-speed playback control. The related page of the first display content includes but is not limited to a details page and the like of the video picture.

For another example, the application for photographing or image shooting is the target application. In a photographing or image shooting scenario, the first display content is a picture obtained by a camera, and the control for controlling the first display content includes but is not limited to a photographing control, an image shooting control, a focal length adjustment control, and the like. The related page of the first display content includes but is not limited to a photographing template, an image shooting template, and the like.

For still another example, the application for an online conference is the target application. In an online conference scenario, the first display content is a conference picture (for example, including but not limited to a desktop sharing picture), and the control of the first display content includes a paintbrush control, a screen recording control, a control for conference window zooming in/out, and the like. The related page of the first display content includes but is not limited to a conference chat window and the like.

With reference to the first aspect, in some possible implementations, a plurality of applications are running in the foreground, the target application is an application that is last operated by a user before the electronic device enters the landscape hover state, and the operation is any operation other than an application exit operation; or two applications displayed on split screens are running in the foreground, and the target application is an application that is in the two applications and that is located in the first area when the electronic device enters the landscape hover state.

With reference to the first aspect, in some possible implementations, the interface is an interface in a preset list, and the preset list includes an interface identifier and an application identifier corresponding to the interface identifier.

With reference to the first aspect, in some possible implementations, the method further includes: when detecting that the electronic device is in a landscape mode and an included angle between a first screen and a second screen is within a preset range, determining that the electronic device is in the landscape hover state, where the first screen and the second screen are screens on two sides of the hinge.

With reference to the first aspect, in some possible implementations, before displaying the first display content in the first area of the screen, the method further includes: enabling an auto-rotation function when the electronic device is in the landscape hover state and detects that the auto-rotation function of the electronic device is disabled.

With reference to the first aspect, in some possible implementations, after displaying the first display content in the first area of the screen, the method further includes: disabling the auto-rotation function when detecting that the electronic device exits the landscape hover state, or in response to a disabling operation of the user on the auto-rotation function.

According to a second aspect, this application provides an electronic device. The electronic device may be configured to implement the method according to any one of the first aspect or the possible implementations of the first aspect. The electronic device includes a corresponding module configured to perform the foregoing method. The module included in the electronic device may be implemented by using software and/or hardware.

According to a third aspect, this application provides an electronic device. The electronic device includes at least one processor and at least one communication interface. The processor is coupled to the communication interface, and may be configured to execute a computer program, to implement the application interface display method according to any one of the first aspect or the possible implementations of the first aspect.

Optionally, the electronic device further includes a memory, and the processor is coupled to the memory.

According to a fourth aspect, this application provides a chip system. The chip system includes at least one processor, configured to support implementation of a function according to any one of the first aspect or the possible implementations of the first aspect, for example, processing data in the foregoing method.

In a possible design, the chip system further includes a memory. The memory is configured to store program instructions and data. The memory is located inside the processor or outside the processor.

The chip system may include a chip, or may include a chip and another discrete component.

According to a fifth aspect, a computer-readable storage medium is provided. The computer storage medium stores a computer program (which may also be referred to as code or instructions), and when the computer program is run by a computer, the method according to any one of the first aspect or the possible implementations of the first aspect is performed.

According to a sixth aspect, a computer program product is provided. The computer program product includes a computer program (which may also be referred to as code or instructions), and when the computer program is run, the method according to any one of the first aspect or the possible implementations of the first aspect is performed.

It should be understood that the second aspect to the sixth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a diagram of a structure of an electronic device applicable to an application interface display method according to an embodiment of this application;
FIG. 2 is a side view of an electronic device applicable to an application interface display method according to an embodiment of this application;
FIG. 3 is a diagram of different states of an electronic device applicable to an application interface display method according to an embodiment of this application;
FIG. 4 is a schematic flowchart of an application interface display method according to an embodiment of this application;
FIG. 5 is a diagram of a scenario of determining a target application according to an embodiment of this application;
FIG. 6 is a diagram of another scenario of determining a target application according to an embodiment of this application;
FIG. 7 is a diagram of a first area and a second area that are applicable to an application interface display method according to an embodiment of this application;
FIG. 8 is a diagram of an interface that is before an electronic device enters a landscape hover state and that is applicable to an application interface display method according to an embodiment of this application;
FIG. 9 is a diagram of an interface that is after an electronic device enters a landscape hover state and that is applicable to an application interface display method according to an embodiment of this application;
FIG. 10 is another diagram of a first area and a second area that are applicable to an application interface display method according to an embodiment of this application;
FIG. 11 is still another diagram of a first area and a second area that are applicable to an application interface display method according to an embodiment of this application;
FIG. 12 is yet another diagram of a first area and a second area that are applicable to an application interface display method according to an embodiment of this application; and
FIG. 13 is another schematic flowchart of an application interface display method according to an embodiment of this application.

### DESCRIPTION OF EMBODIMENTS

The following describes technical solutions of this application with reference to accompanying drawings.

First, in embodiments of this application, terms such as "first" and "second" are used to distinguish between same items or similar items that have basically same functions or purposes. For example, first display content and second display content are used to distinguish between different display content, and a sequence of the first display content and the second display content is not limited. A person skilled in the art may understand that the terms such as "first" and "second" do not limit a quantity or an execution sequence, and the terms such as "first" and "second" do not indicate a definite difference.

Second, in embodiments of this application, the terms "include", "have", and any other variants thereof are intended to cover a non-exclusive inclusion. For example, an apparatus, a system, a product, or a device that includes a series of assemblies, modules, or units is not necessarily limited to those assemblies, modules, or units that are expressly listed, but may include other assemblies, modules, or units that are not expressly listed or are inherent to such an apparatus, a system, a product, or a device.

Third, in embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context.

Fourth, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

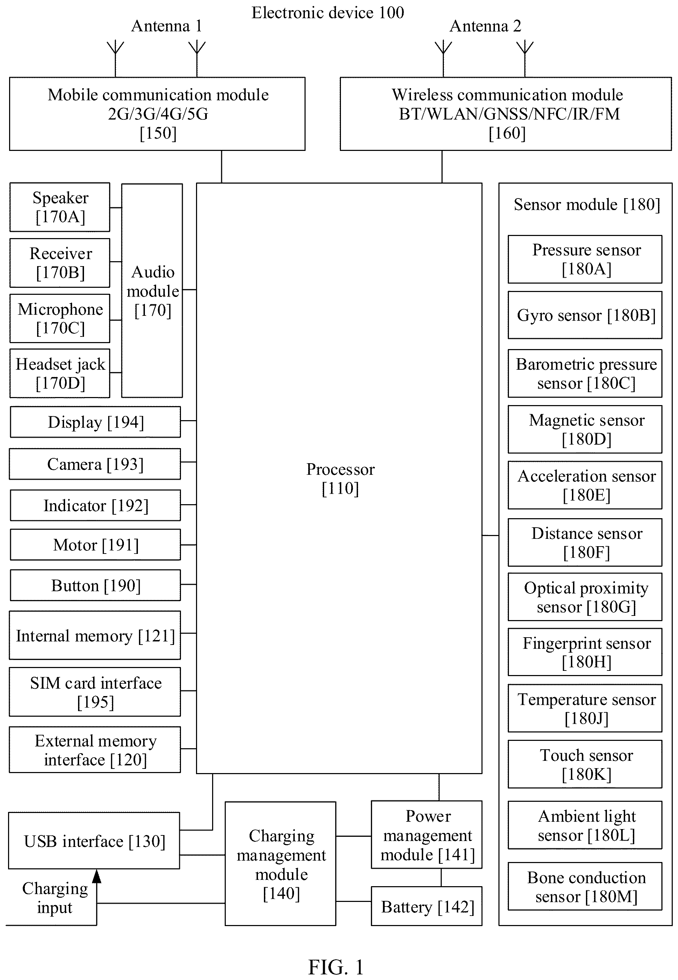

Before an application interface display method provided in embodiments of this application is described in detail below, an example of an electronic device applicable to embodiments of this application is first described with reference to FIG. 1.

The application interface display method provided in embodiments of this application may be applied to an electronic device with a foldable screen, for example, a foldable mobile phone. A specific type of the electronic device is not limited in embodiments of this application.

In addition, the method described in embodiments of this application may support operating systems such as an Android operating system (Android operating system, Android OS), HarmonyOS, and OpenHarmony. This is not limited in embodiments of this application.

FIG. 1 is a diagram of a structure of an electronic device applicable to an application interface display method according to an embodiment of this application.

For example, FIG. 1 shows a diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit (neural-network processing unit, NPU). Different processing units may be independent components, or may be integrated into one or more processors.

The application processor outputs a sound signal through the audio module 170 (for example, the speaker 170A), or displays an image or a video through the display 194.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The processor 110 may perform different operations by executing instructions, to implement different functions. For example, the instructions may be instructions pre-stored in the memory before the device is delivered from a factory, or may be instructions read from a new APP after a user installs the APP in a use process. This is not limited in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may alternatively be configured to connect to another electronic device, such as an augmented reality (augmented reality, AR) device. It may be understood that an interface connection relationship between modules illustrated in this application is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive charging input from a charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input through a wireless charging coil of the electronic device 100. When charging the battery 142, the charging management module 140 may further supply power to the electronic device 100 by using the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), a fifth generation (5th generation, 5G) communication system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194, which may also be referred to as a screen, may be configured to display an image, a video, and the like. The display 194 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED (Mini-LED), a micro-LED (Micro-LED), a micro-OLED (Micro-OLED), a quantum dot light-emitting diode (quantum dot light-emitting diode, QLED), or the like. In some embodiments, the electronic device 100 may include one or more displays 194.

It should be understood that the display 194 may further include more components, for example, a backlight board or a drive circuit. The backlight board may be configured to provide a light source, and the display panel emits light based on the light source provided by the backlight board. The drive circuit may be configured to control a liquid crystal of a liquid crystal layer to transmit light or not to transmit light.

The electronic device 100 may implement an image shooting function by using the ISP, the camera 193, the video codec, the GPU, the display 194, the application processor, and the like.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various functional applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing or voice recording, by using the audio module 170, for example, the speaker 170A, the receiver 170B, the microphone 170C, and the headset jack 170D, the application processor, and the like.

It may be understood that the structure shown in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

A software system of the electronic device 100 may use a layered architecture, an event-driven architecture, a microkernel architecture, a microservice architecture, or a cloud architecture. In the layered architecture, the software system of the electronic device 100 is divided into several layers, and each layer has a clear role and task. The layers communicate with each other through a software interface. In this application, operating systems such as HarmonyOS, OpenHarmony, and Android with the layered architecture are used as examples, but a type of an operating system of an electronic device used in the application interface display method provided in embodiments of this application should not be limited.

With continuous development of terminal screen manufacturing technologies in terminal technologies, a growing quantity of electronic devices with foldable screens emerge. An electronic device with a foldable screen may have an unfolded state, a hover state, and a folded state.

For ease of understanding, the following describes different states of an electronic device with a foldable screen in this application.

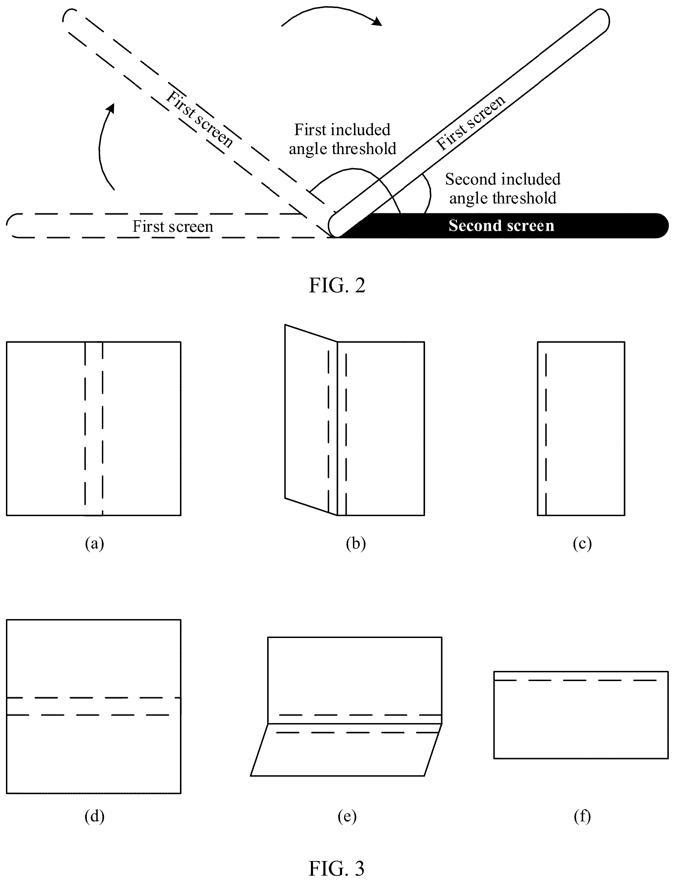

The following briefly describes different states of the electronic device with reference to FIG. 2.

FIG. 2 is a side view of an electronic device applicable to an application interface display method according to an embodiment of this application.

For ease of description, in this application, screens on two sides of a hinge of a screen are respectively denoted as a first screen and a second screen. The hinge may be understood as a mechanical apparatus configured to connect two solids and allow the two solids to rotate relative to each other.

As shown in FIG. 2, when an included angle between the first screen and the second screen is less than or equal to a first included angle threshold and greater than or equal to a second included angle threshold, the electronic device is in a hover state. When the included angle between the first screen and the second screen is greater than the first included angle threshold, the electronic device is in an unfolded state. When the included angle between the first screen and the second screen is less than the second included angle threshold, the electronic device is in a folded state.

It may be understood that values of the first included angle threshold and the second included angle threshold for electronic devices whose screens are foldable and that are of different models may be different. The values of the first included angle threshold and the second included angle threshold are not limited in this application. By way of example rather than limitation, in some embodiments, the first included angle threshold may be 140 degrees, and the second included angle threshold may be 25 degrees.

FIG. 3 is a diagram of different states of an electronic device applicable to an application interface display method according to an embodiment of this application.

An electronic device with a foldable screen may have different states. For example, (a) in FIG. 3 shows that the electronic device is in a portrait unfolded state, (b) in FIG. 3 shows that the electronic device is in a portrait hover state, (c) in FIG. 3 shows that the electronic device is in a portrait folded state, (d) in FIG. 3 shows that the electronic device is in a landscape unfolded state, (e) in FIG. 3 shows that the electronic device is in a landscape hover state, and (f) in FIG. 3 shows that the electronic device is in a landscape folded state.

It should be understood that a dashed line part shown in FIG. 3 represents a position of a hinge of the screen of the electronic device.

It may be understood that the electronic device being in a portrait mode and a hover state is the electronic device being in the portrait hover state, and the electronic device being in a landscape mode and the hover state is the electronic device being in the landscape hover state.

Currently, when the electronic device with the foldable screen is in the landscape hover state, most applications (applications, APPs) do not have a capability of adapting to the landscape hover state to display an application interface. Application interfaces of these applications are bent due to a folding radian of the screen. This affects viewing and/or an operation of a user on content in bent areas in the application interfaces, resulting in poor user experience.

For the foregoing problem, this application provides an application interface display method and a related apparatus. An electronic device autonomously senses and determines whether the electronic device is in a landscape hover state. In the landscape hover state, the electronic device displays first display content of a target application by avoiding a bend of a hinge, so that viewing and an operation of a user are not affected, thereby improving user experience.

Applications in embodiments of this application include a third-party application and a system application.

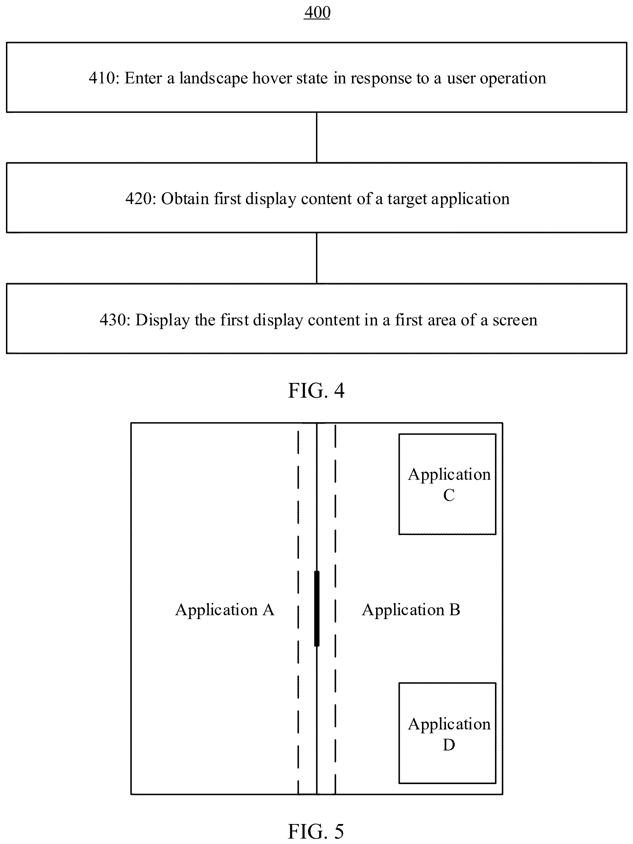

With reference to FIG. 4, the following describes the application interface display method provided in this application.

FIG. 4 is a schematic flowchart of an application interface display method according to an embodiment of this application.

As shown in FIG. 4, a method 400 may include step 410 to step 430. The steps of the method 400 may be performed by an electronic device, or the method 400 may be performed by a component (for example, a chip or a chip system) configured in an electronic device, or may be implemented by a logical module or software that can implement all or some functions of an electronic device. This is not limited in this embodiment of this application.

The electronic device may have the structure shown in FIG. 1. This is not limited in this embodiment of this application. The following describes the steps in FIG. 4 in detail.

Step 410: Enter a landscape hover state in response to a user operation.

The electronic device may enter the landscape hover state in response to a screen rotation operation and/or a screen angle adjustment operation (including a screen folding operation or a screen opening operation) performed by a user on the electronic device.

For example, if an initial state of the electronic device is the portrait unfolded state shown in (a) in FIG. 3, the electronic device may enter the landscape unfolded state shown in (d) in FIG. 3 in response to a screen rotation operation performed by the user on the electronic device, and then enter the landscape hover state shown in (e) in FIG. 3 in response to a screen folding operation performed by the user on the electronic device.

For another example, if an initial state of the electronic device is the portrait unfolded state shown in (a) in FIG. 3, the electronic device may enter the portrait hover state shown in (b) in FIG. 3 in response to a screen folding operation performed by the user on the electronic device, and then enter the landscape hover state shown in (e) in FIG. 3 in response to a screen rotation operation performed by the user on the electronic device.

For still another example, if an initial state of the electronic device is the portrait folded state shown in (c) in FIG. 3, the electronic device may enter the portrait hover state shown in (b) in FIG. 3 in response to a screen opening operation performed by the user on the electronic device, and then enter the landscape hover state shown in (e) in FIG. 3 in response to a screen rotation operation performed by the user on the electronic device.

It should be understood that, in this embodiment of this application, the initial state of the electronic device may include any state other than the landscape hover state. This is not limited in this application, provided that the electronic device can enter the landscape hover state in response to a user operation.

In some embodiments, the method 400 further includes: when detecting that the electronic device is in a landscape mode and an included angle between a first screen and a second screen is within a preset range, determining that the electronic device is in the landscape hover state, where the first screen and the second screen are screens on two sides of a hinge.

In other words, the electronic device may autonomously sense and determine whether the electronic device is in the landscape hover state.

By way of example rather than limitation, the electronic device may detect and determine, based on a gyro sensor, whether the electronic device is in the landscape mode, and may further detect and determine, based on an angle sensor, whether the included angle between the first screen and the second screen is within the preset range. When detecting that the electronic device is in the landscape mode and the included angle between the first screen and the second screen is within the preset range, the electronic device determines that the electronic device is in the landscape hover state.

Step 420: Obtain first display content of a target application.

The target application is an application running in a foreground of the electronic device. The first display content is a part or all of content in an interface of the target application before the electronic device enters the landscape hover state.

When determining that the electronic device enters the landscape hover state, the electronic device may obtain the first display content of the target application. The first display content is related to a type of the target application.

In some embodiments, the first display content is the part of the content in the interface of the target application before the landscape hover state is entered, and the interface further includes a related page of the first display content and/or a control for controlling the first display content.

When the first display content is the part of the content in the interface of the target application before the electronic device enters the landscape hover state, the type of the target application may be a predefined first type of application. In addition, before the landscape hover state is entered, the interface of the target application further includes the related page of the first display content and/or the control for controlling the first display content.

Optionally, the target application may include but is not limited to an application for playing a video, an application for photographing or image shooting, or an application for an online conference.

For example, the application for playing a video is the target application. In a video playing scenario, the first display content is a video picture, and the control for controlling the first display content includes a video control, for example, including but not limited to a control for pausing/playing a video, a progress bar control, and a variable-speed playback control. The related page of the first display content includes but is not limited to a details page and the like of the video picture.

For another example, the application for photographing or image shooting is the target application. In a photographing or image shooting scenario, the first display content is a picture obtained by a camera, and the control for controlling the first display content includes but is not limited to a photographing control, an image shooting control, a focal length adjustment control, and the like. The related page of the first display content includes but is not limited to a photographing template, an image shooting template, and the like.

For still another example, the application for an online conference is the target application. In an online conference scenario, the first display content is a conference picture (for example, including but not limited to a desktop sharing picture), and the control of the first display content includes a paintbrush control, a screen recording control, a control for conference window zooming in/out, and the like. The related page of the first display content includes but is not limited to a conference chat window and the like.

In some embodiments, the target application is a preset second type of application, and the first display content is all of the content in the interface of the target application before the landscape hover state is entered.

When the type of the target application is the second type of application, different from the first type of application, the first display content is the part of the content in the interface of the target application before the electronic device enters the landscape hover state.

By way of example rather than limitation, the second type of application includes but is not limited to a navigation application or a health application.

The first type of application and the second type of application may be predefined application types.

Optionally, before the electronic device is delivered from a factory, an application list (for ease of description, the application list is denoted as an application trustlist) may be deployed in the electronic device in advance. The application trustlist may include an identifier of at least one application and an application type corresponding to each of the at least one application. The application list may support cloud-based updating. For example, the application trustlist may be updated with an update of a version of an operating system of the electronic device. This is not limited in this application.

Optionally, the operating system of the electronic device may provide a registration interface for applications. When the user uses the electronic device, in an installation process of an application, the application may invoke the registration interface to register as the first type of application or the second type of application, so that the electronic device may know which application in the electronic device is the first type of application, which application is the second type of application, and which application is neither the first type of application nor the second type of application. This is equivalent to maintaining an application trustlist in the electronic device.

If an application in the application trustlist is running in the foreground of the electronic device, when the electronic device enters the landscape hover state, the application is the target application. If a plurality of applications in the application trustlist are running in the foreground of the electronic device, when the electronic device enters the landscape hover state, the electronic device may determine one application from the plurality of applications as the target application based on a first preset condition.

Optionally, a plurality of applications are running in the foreground, the target application is an application that is last operated by the user before the electronic device enters the landscape hover state, and the operation is any operation other than an application exit operation.

In other words, when a plurality of applications are running in the foreground of the electronic device, the first preset condition may include that the target application is an application that is last operated by the user before the electronic device enters the landscape hover state.

FIG. 5 is a diagram of a scenario of determining a target application according to an embodiment of this application.

As shown in FIG. 5, an application A, an application B, an application C, and an application D are running in the foreground of the electronic device. The application A and the application B are two applications that are running on split screens with a center line of the hinge (a dashed line area) as a screen splitting line, and the application C and the application D are two applications that are running in floating windows. For example, an operation that is last performed by the user before the electronic device enters the landscape hover state is performed on the application B, and in this case, when the electronic device enters the landscape hover state, the application B is the target application.

Optionally, two applications displayed on split screens are running in the foreground, and the target application is an application that is in the two applications and that is located in a first area when the electronic device enters the landscape hover state.

In other words, when two applications are running in a split-screen mode in the foreground of the electronic device, the first preset condition may include that the target application is an application that is located in the first area when the electronic device enters the landscape hover state. The first area is an area that is of a screen of the electronic device and that is located above the center line of the hinge in the landscape hover state.

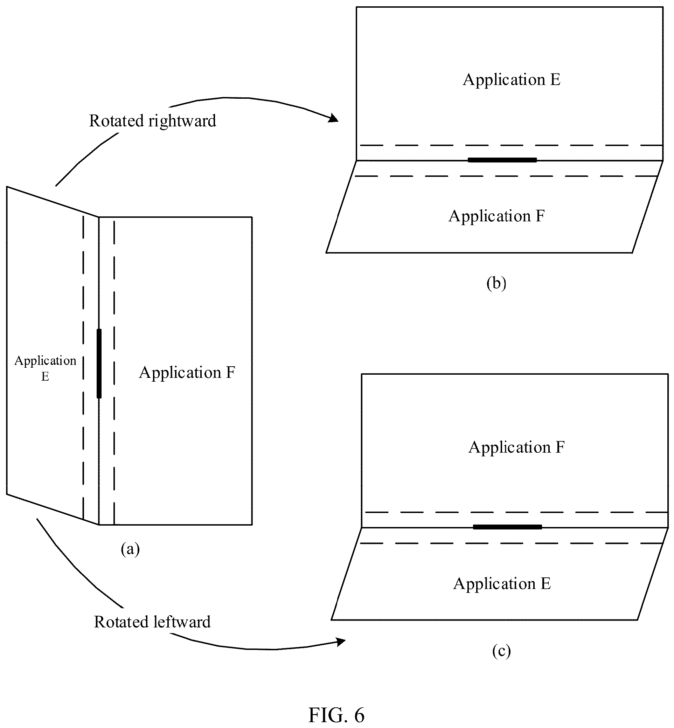

FIG. 6 is a diagram of another scenario of determining a target application according to an embodiment of this application.

As shown in (a) in FIG. 6, an application E and an application F are running in the split-screen mode in the foreground of the electronic device.

In this embodiment of this application, when the electronic device is in the portrait hover state and the split-screen mode, and the electronic device is rotated from the portrait hover state or the portrait unfolded state to the landscape hover state, an application that is located in an area above the center line of the hinge after the electronic device is rotated is used as the target application based on a rotation direction of the electronic device.

For example, when the electronic device is rotated rightward from the portrait hover state shown in (a) in FIG. 6 to enter the landscape hover state shown in (b) in FIG. 6, and when the electronic device enters the landscape hover state, the application E is located in the first area, that is, the application E is located in an area above the center line of the hinge, and in this case, the application E is the target application.

For another example, when the electronic device is rotated leftward from the portrait hover state shown in (a) in FIG. 6 to enter the landscape hover state shown in (c) in FIG. 6, and when the electronic device enters the landscape hover state, the application F is located in the first area, that is, the application F is located in an area above the center line of the hinge, and in this case, the application F is the target application.

In some embodiments, the interface is an interface in a preset list, and the preset list includes an interface identifier and an application identifier corresponding to the interface identifier.

Similar to the foregoing application trustlist, the preset list (for ease of description, the preset list is denoted as an application interface trustlist) may be deployed in advance before the electronic device is delivered from a factory, or may be gradually formed through registration of an application with the operating system of the electronic device during application installation.

Optionally, before the electronic device is delivered from a factory, an application interface trustlist may be deployed in the electronic device in advance. The application interface trustlist may include an interface identifier of at least one application interface and an application identifier of an application to which the at least one application interface belongs. The application interface trustlist may further include a type of an application corresponding to the application identifier, for example, the first type of application and the second type of application that are described above. In this way, the application interface trustlist may include a first type of interface and a second type of interface, the first type of interface corresponds to the first type of application, and the second type of interface corresponds to the second application. The application interface trustlist may support cloud-based updating. For example, the application interface trustlist may be updated with an update of a version of an operating system of the electronic device. This is not limited in this application.

Optionally, the operating system of the electronic device may provide a registration interface for applications. In an installation process, an application may invoke the registration interface to register an application interface, so that the electronic device may know which interface of which application in the electronic device may be an interface that needs to display the first display content in the first area when the electronic device enters the landscape hover state (for ease of description, the interface is denoted as a candidate interface).

By way of example rather than limitation, in some embodiments, when the electronic device enters the landscape hover state, the electronic device may determine, based on conditions such as a layout of an application interface and whether the application interface includes a control, whether the application interface is a candidate interface. When determining that the application interface is a candidate interface, the electronic device may obtain first display content in the candidate interface.

If one application is running in the foreground of the electronic device before the electronic device enters the landscape hover state, and an interface of the application is an interface in the application interface trustlist, or the electronic device determines that the interface is a candidate interface, when the electronic device enters the landscape hover state, the electronic device may obtain first display content in the candidate interface. If the interface of the application is not an interface in the application interface trustlist, or the electronic device determines that the interface is not a candidate interface, when the electronic device enters the landscape hover state, the electronic device does not need to avoid a bend of the hinge to display the display content of the application.

If a plurality of applications are running in the foreground of the electronic device before the electronic device enters the landscape hover state, and at least two of interfaces displayed by the plurality of applications are interfaces in the application interface trustlist, or the electronic device determines that at least two of interfaces displayed by the plurality of applications are candidate interfaces, when the electronic device enters the landscape hover state, the electronic device may determine one target interface from the at least two candidate interfaces based on a second preset condition, and then obtain first display content in the target interface.

For example, the second preset condition may include that a candidate interface that is last operated by the user before the electronic device enters the landscape hover state is the target interface. It may be understood that an application to which the target interface belongs is the target application. For example, as shown in FIG. 5, if an interface of the application A and an interface of the application C are interfaces in the application interface trustlist, or the electronic device determines that the interface of the application A and the interface of the application C are candidate interfaces, and an operation that is last performed by the user before the electronic device enters the landscape hover state is performed on the interface of the application A, when the electronic device enters the landscape hover state, the interface of the application A is the target interface, and correspondingly, the application A is the target application.

For another example, when two applications are running in the split-screen mode in the foreground of the electronic device, and interfaces of the two applications are both interfaces in the application interface trustlist, or the electronic device determines that the interfaces of the two applications are both candidate interfaces, the second preset condition may include that the target interface is an interface of an application that is located in the first area when the electronic device enters the landscape hover state. For example, as shown in FIG. 6, if an interface of the application E and an interface of the application F are interfaces in the application interface trustlist, or the electronic device determines that the interface of the application E and the interface of the application F are candidate interfaces, when the electronic device is rotated rightward from the portrait hover state shown in (a) in FIG. 6 to enter the landscape hover state shown in (b) in FIG. 6, and when the electronic device enters the landscape hover state, the interface of the application E is located in the first area, and in this case, the interface of the application E is the target interface, and correspondingly, the application E is the target application. When the electronic device is rotated rightward from the portrait hover state shown in (a) in FIG. 6 to enter the landscape hover state shown in (c) in FIG. 6, and when the electronic device enters the landscape hover state, the interface of the application F is located in the first area, and in this case, the interface of the application F is the target interface, and correspondingly, the application F is the target application.

It may be understood that, if an interface of only one of the plurality of applications is an interface in the application interface trustlist, or is an interface that is determined as a candidate interface by the electronic device, the interface of the application is the target interface, and correspondingly, the application is the target application.

If none of the interfaces of the plurality of applications is an interface in the application interface trustlist, or the electronic device determines that none of the interfaces of the plurality of applications is a candidate interface, when the electronic device enters the landscape hover state, the electronic device does not need to avoid a bend of the hinge to display the display content of the applications.

Step 430: Display the first display content in a first area of a screen.

As described above, the first area is an area that is of the screen and that is located above the center line of the hinge in the landscape hover state. The hinge is configured to control opening and closing of the screen.

If the target application is the first type of application, the electronic device may extract the first display content of the target application from a surface view (surface view), add a new display layer to the first area, and mount the extracted first display content to the newly added display layer in the first area for display.

For the first type of application, the electronic device may display content other than the first display content in a second area.

The second area is an area that is of the screen and that is located below the hinge in the landscape hover state. For example, if a width of the hinge is 2 centimeters (centimeter, cm), the second area may be an area beyond 1 cm (obtained through 2/2) below the center line of the hinge. Avoiding an area in which the hinge is located is equivalent to avoiding an area in which viewing and an operation of the user are affected due to a radian formed by screen folding.

The following provides detailed descriptions with reference to several possible implementations.

In some embodiments, the method 400 may further include: displaying the control in the second area of the screen.

For descriptions of the control, refer to the foregoing related content. For brevity, details are not described herein again.

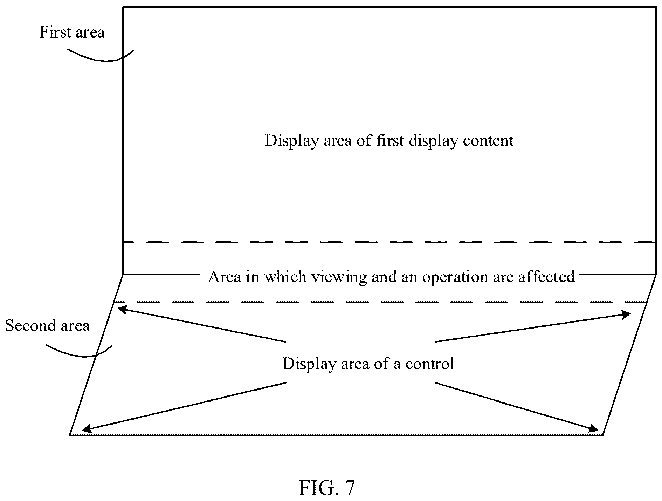

FIG. 7 is a diagram of a first area and a second area that are applicable to an application interface display method according to an embodiment of this application.

As shown in FIG. 7, the first area is a display area of the first display content, that is, the first area is used to display the first display content; and the second area is a display area of the control, that is, the second area is used to display the control.

The electronic device may forcibly modify an activity record (activity record) (which may also be understood as a display area) of the target application to the second area, so that the control may be displayed in the second area of the screen. In addition, as described above, the electronic device may extract the first display content of the target application from the surface view, add a new display layer to the first area, and mount the extracted first display content to the newly added display layer in the first area for display.

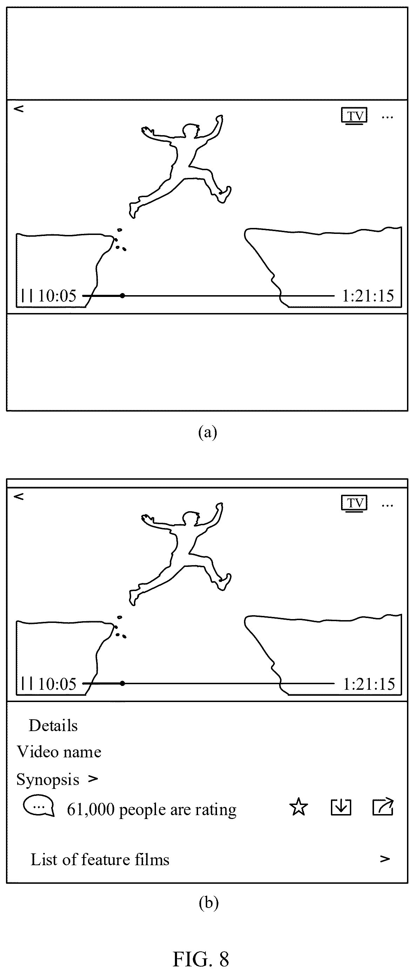

FIG. 8 is a diagram of an interface that is before an electronic device enters a landscape hover state and that is applicable to an application interface display method according to an embodiment of this application.

As shown in FIG. 8, a video playing scenario is used as an example. As shown in (a) in FIG. 8, before the electronic device enters the landscape hover state, the electronic device plays a video in full screen in the landscape unfolded state. As shown in (b) in FIG. 8, before the electronic device enters the landscape hover state, the electronic device plays a video in a non-full screen mode in an application interface with a video details page in the landscape unfolded state.

When the user performs a screen folding operation on the electronic device, and the electronic device enters the landscape hover state in response to the operation of the user, the electronic device obtains a video picture and a control that are shown in FIG. 8, displays the video picture in the first area, and displays the control in the second area.

The second area is the area that is of the screen and that is located below the hinge in the landscape hover state. Displaying the control in the second area may avoid a hinge area, that is, avoid an area in which the screen is bent into a radian. This not only does not affect viewing of the user on an application interface, but also facilitates an operation of the user on the control. In addition, when the second area of the electronic device is placed on and parallel to a desktop, it is not likely to overturn the electronic device by performing an operation on the control displayed in the second area, thereby further improving user experience.

Optionally, when the electronic device enters the landscape hover state, some dynamic effect (which may be referred to as animation for short) may be displayed with reference to rotation and/or folding of the screen.

It may be understood that, when the electronic device enters the landscape hover state, dynamic effect may be set with reference to a screen rotation scenario and a screen folding scenario. For example, when the electronic device is rotated from the portrait hover state to the landscape hover state, the electronic device simultaneously performs dynamic effect such as window displacement, window rotation, window transparency, and window zooming.

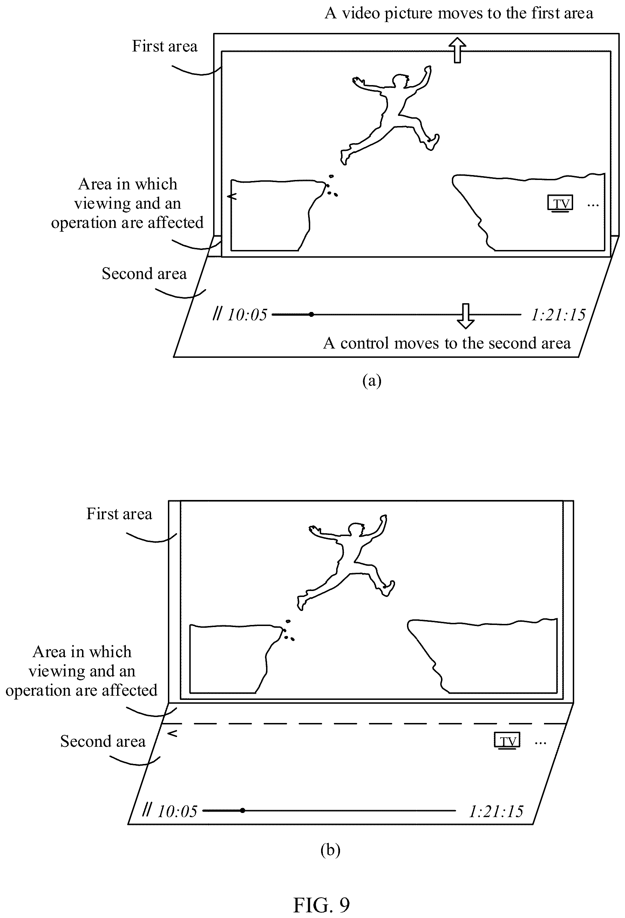

FIG. 9 is a diagram of an interface that is after an electronic device enters a landscape hover state and that is applicable to an application interface display method according to an embodiment of this application.

By way of example rather than limitation, a video playing scenario is used as an example. In a process of entering a display interface in the landscape hover state from a video playing interface shown in (a) or (b) in FIG. 8, as shown in (a) in FIG. 9, a video picture may move to the first area, and a control may move to the second area. Finally, in an interface shown in (b) in FIG. 9, the video picture is displayed in the first area, and the control is displayed in the second area.

When the landscape hover state is entered from the portrait unfolded state and the portrait hover state, there may be additional dynamic effect of rotation of the video picture and the control with a rotation direction of the electronic device, compared with dynamic effect that is from (a) in FIG. 9 to (b) in FIG. 9 and that is shown in FIG. 9. For brevity, details are not described herein again.

By way of example rather than limitation, parameters of the dynamic effect may include but are not limited to: a window rotation parameter, a window displacement parameter, a window zooming parameter, a window transparency parameter, an information layer transparency parameter, a background transparency parameter, and the like.

In some embodiments, the method 400 may further include: displaying a page flip control and one of the control or the related page in the second area of the screen, where the page flip control is used to control switching between the control and the related page.

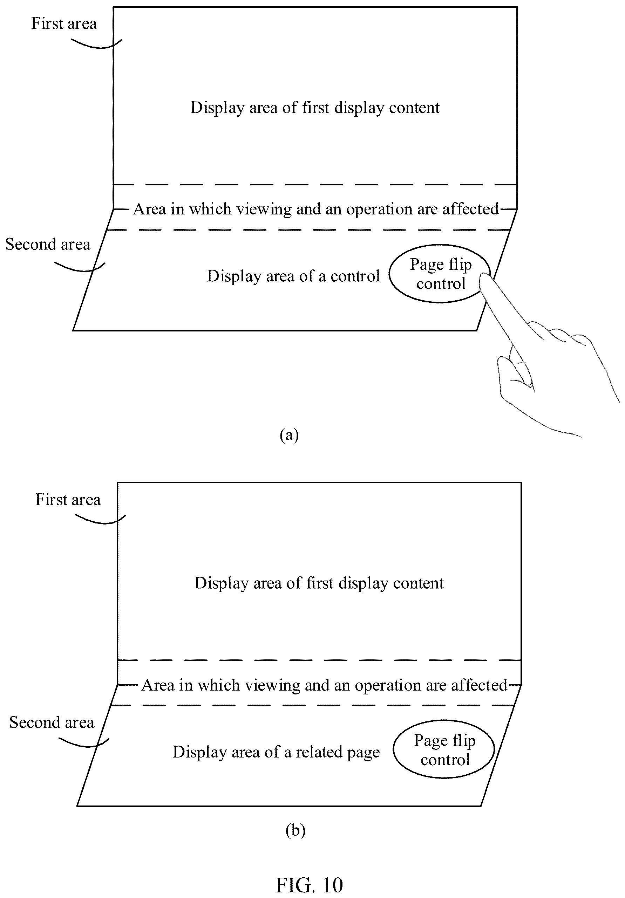

FIG. 10 is another diagram of a first area and a second area that are applicable to an application interface display method according to an embodiment of this application.

As shown in FIG. 10, the first area is a display area of the first display content, that is, the first area is used to display the first display content; and the second area is a display area of the control and a display area of the related page, that is, the second area is used to display the control and the related page. As shown in (a) in FIG. 10, the first display content is displayed in the first area of the screen, and the control and the page flip control are displayed in the second area of the screen. The user may switch display content in the first area by tapping the page flip control. For example, in response to an operation of tapping the page flip control by the user, the electronic device may switch from an interface shown in (a) in FIG. 10 to an interface shown in (b) in FIG. 10, and the related page is displayed in the second area in (b) in FIG. 10. It may be understood that the electronic device may further switch to the interface shown in (b) in FIG. 10 in response to an operation of the user on the page flip control in the second area shown in (b) in FIG. 10.

A specific form of the page flip control and a specific position of the page flip control in the second area are not limited in this embodiment of this application.

In some embodiments, the method 400 may further include: displaying the related page in the second area of the screen, and displaying the control in the first area of the screen.

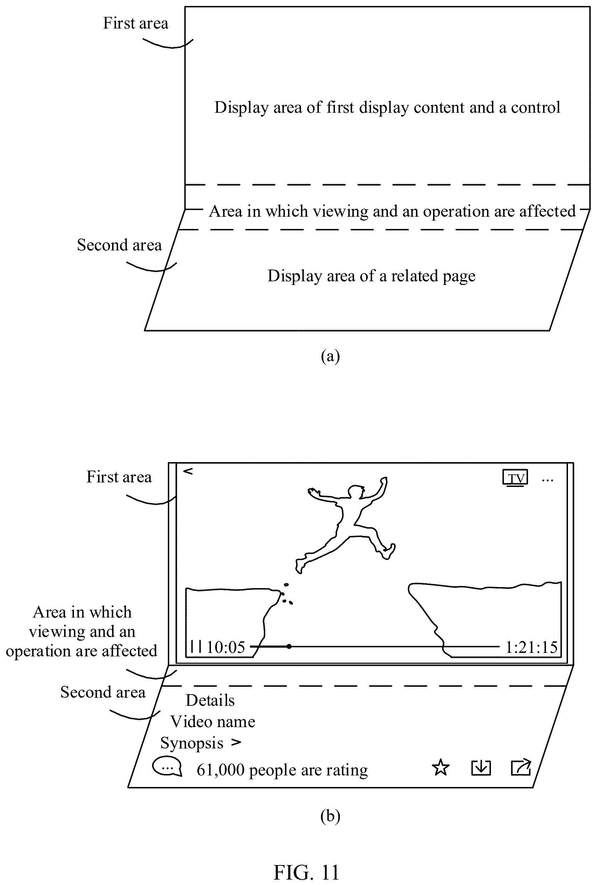

FIG. 11 is still another diagram of a first area and a second area that are applicable to an application interface display method according to an embodiment of this application.

As shown in (a) in FIG. 11, the first area is a display area of the first display content and the control, that is, the first area is used to display the first display content and the control; and the second area is a display area of the related page, that is, the second area is used to display the related page. A video playing scenario is used as an example. If the electronic device displays the interface shown in (b) in FIG. 8 before the electronic device enters the landscape hover state, after the electronic device enters the landscape hover state, as shown in (b) in FIG. 11, the first area is used to display a video picture and a control, and the second area is used to display a details page of the video picture.

By way of example rather than limitation, to make a display interface more aesthetic, an area from the center line of the hinge to an upper boundary of the second area may be filled with a same-color background according to a background color of the related page, that is, a background that is the same as the background color of the related page is displayed in the area from the center line of the hinge to the upper boundary of the second area. This is not limited in this application.

If the target application is the second type of application, the electronic device may forcibly modify the display area of the target application to the first area, so that the first display content may be displayed in the first area of the screen. In addition, by way of example rather than limitation, a surface layer with a background of a preset color may be further added to the second area of the screen.

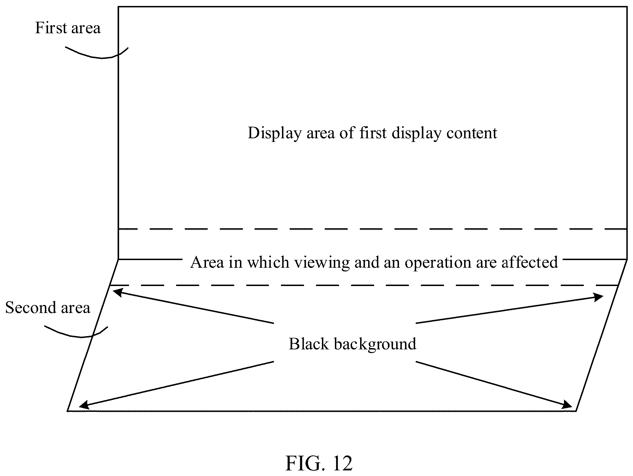

FIG. 12 is yet another diagram of a first area and a second area that are applicable to an application interface display method according to an embodiment of this application.

As shown in FIG. 12, the first area is a display area of the first display content, that is, the first area is used to display the first display content; and no content may be displayed in the second area, or a background of a preset color, for example, a black background, may be displayed.

In some embodiments, before displaying the first display content in the first area of the screen, the method 400 further includes: enabling an auto-rotation function when the electronic device is in the landscape hover state and detects that the auto-rotation function of the electronic device is disabled.

It may be understood that, when the auto-rotation function (for example, an auto-rotation key) of the electronic device is enabled, an application interface may rotate with rotation of the electronic device. However, when the auto-rotation function of the electronic device is disabled, a picture displayed by the electronic device is in a state in which a display direction (a landscape display direction or a portrait display direction) is locked, and an application interface cannot rotate with the rotation of the electronic device. Therefore, before the first display content is displayed in the first area of the screen, when the electronic device is in the landscape hover state and detects that the auto-rotation function is disabled, the electronic device may actively enable the auto-rotation function, so that an application interface may rotate with the rotation of the electronic device.

In some embodiments, when the electronic device is rotated, and when the first area before the rotation changes to the second area, and the second area before the rotation changes to the first area, display content of the first area before the rotation and display content of the second area before the rotation may exchange positions as the electronic device is rotated.

In some embodiments, after displaying the first display content in the first area of the screen, the method 400 further includes: disabling the auto-rotation function when detecting that the electronic device exits the landscape hover state, or in response to a disabling operation of the user on the auto-rotation function.

After the first display content is displayed in the first area of the screen, when the electronic device detects that the electronic device exits the landscape hover state, that is, when the electronic device detects that the electronic device is not in the landscape mode, or detects that the included angle between the first screen and the second screen is not within the preset range, the electronic device may automatically disable the auto-rotation function that is automatically enabled previously. In addition, the electronic device may exit the display of the first display content in the first area, to display an application interface in an interface layout that is before the landscape hover state is entered, that is, to restore the application interface that is before the landscape hover state is entered.

When the electronic device exits the landscape hover state, there may also be dynamic effect in a process in which the electronic device restores the application interface to the application interface that is before the electronic device enters the landscape hover state. For detailed descriptions of the dynamic effect, refer to the foregoing related descriptions. For brevity, details are not described herein again.

When interfaces of a plurality of applications are displayed in the split-screen mode and/or a floating window mode, in some embodiments, before the first display content is displayed in the first area of the screen, the electronic device may automatically end the split-screen mode and/or the floating window mode for the plurality of applications, that is, exit an application other than the target application in the foreground. In this way, after the first display content is displayed in the first area of the screen, when the electronic device exits the landscape hover state, the electronic device may display the target application based on a layout of the target application, and does not need to display an interface of the application that is other than the target application and that previously runs in the foreground. In some other embodiments, before the first display content is displayed in the first area of the screen, the electronic device may not end the split-screen mode and/or the floating window mode for the plurality of applications. In this way, after the first display content is displayed in the first area of the screen, when the electronic device exits the landscape hover state, the electronic device may display the interfaces of the plurality of applications that previously run in the foreground and that include the target application.

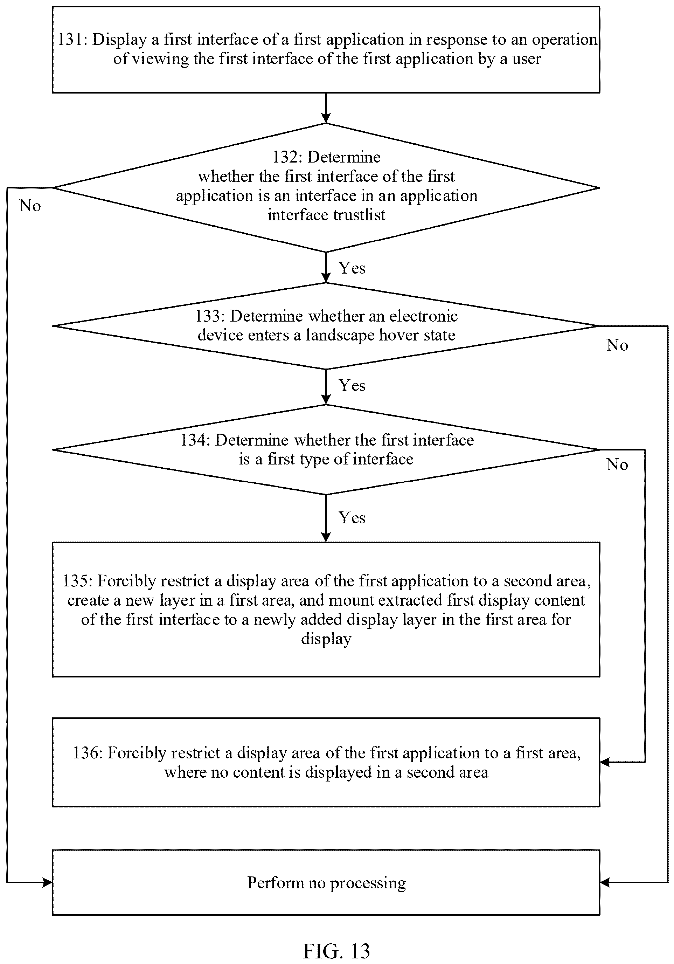

For better understanding, with reference to FIG. 13, the following briefly describes again the application interface display method provided in this application.

FIG. 13 is another schematic flowchart of an application interface display method according to an embodiment of this application.

Steps in FIG. 13 may be performed by an electronic device, or may be performed by a component (for example, a chip or a chip system) configured in an electronic device, or may be implemented by a logical module or software that can implement all or some functions of an electronic device. This is not limited in this embodiment of this application.

Step 131: Display a first interface of a first application in response to an operation of viewing the first interface of the first application by a user.

The electronic device may draw and render the first interface of the first application in response to the operation of viewing the first interface of the first application by the user, and display the first interface on a screen.

Step 132: Determine whether the first interface of the first application is an interface in an application interface trustlist.

The electronic device may determine whether the first interface of the first application is an interface in the application interface trustlist. If the first interface is an interface in the application interface trustlist, step 133 may be performed. If the first interface is not an interface in the application interface trustlist, the electronic device may perform no processing.

For detailed descriptions of the application interface trustlist, refer to the foregoing related descriptions. For brevity, details are not described herein again.

Step 133: Determine whether the electronic device enters a landscape hover state.

If the first interface is an interface in the application interface trustlist, the electronic device may determine whether the electronic device enters the landscape hover state. If the electronic device enters the landscape hover state, the electronic device may perform step 134. If the electronic device does not enter the landscape hover state, the electronic device may perform no processing.

It should be noted that a sequence of performing step 132 and step 134 is not limited in this application. In other words, in an actual application scenario, step 132 may be performed before step 133, or step 133 may be performed before step 132.

For detailed descriptions of the landscape hover state, refer to the foregoing related descriptions. For brevity, details are not described herein again.

Step 134: Determine whether the first interface is a first type of interface.

The electronic device may determine whether the first interface is the first type of interface. If the first interface is the first type of interface, step 135 may be performed. If the first interface is not the first type of interface, step 136 may be performed.

Step 135: Forcibly restrict a display area of the first application to a second area, create a new layer in a first area, and mount extracted first display content of the first interface to a newly added display layer in the first area for display.

If the first interface is the first type of interface, the electronic device may forcibly modify the display area of the first application to the second area, so that a control or a related page may be displayed in the second area of the screen. In addition, the electronic device may extract the first display content of the target application from a surface view, add a new display layer to the first area, and mount the extracted first display content to the newly added display layer in the first area for display.

Step 136: Forcibly restrict a display area of the first application to a first area, where no content is displayed in a second area.

In step 132, it is determined that the first interface is an interface in the application interface trustlist. In this case, if the first interface is not the first type of interface, the first interface is a second type of interface. If the first interface is the second type of interface, the electronic device may forcibly modify the display area of the first application to the first area, so that the first display content may be displayed in the first area of the screen. No content may be displayed in the second area. In addition, by way of example rather than limitation, a surface layer with a background of a preset color may be further added to the second area of the screen. In other words, a background of a preset color, for example, a black background, may be displayed in the second area.

For detailed descriptions of the first area and the second area, refer to the foregoing related content. For brevity, details are not described herein again.

Based on the foregoing solution, the electronic device autonomously senses and determines whether the electronic device is in the landscape hover state. In the landscape hover state, the electronic device displays the first display content of the target application by avoiding a bend of a hinge, so that viewing and an operation of a user are not affected, thereby improving user experience. In addition, the method is deployed in an operating system of the electronic device, and in an entire process, the first display content of the target application may be displayed by avoiding the bend of the hinge, without requiring the target application to adapt to the landscape hover state to display an application interface, so that the method has relatively good universality. Moreover, the second area is an area that is of the screen and that is located below the hinge in the landscape hover state. Displaying the control in the second area may avoid a hinge area, that is, avoid an area in which the screen is bent into a radian. This not only does not affect viewing of the user on an application interface, but also facilitates an operation of the user on the control. In addition, when the second area of the electronic device is placed on and parallel to a desktop, it is not likely to overturn the electronic device by performing an operation on the control displayed in the second area, thereby further improving user experience.

An embodiment of this application further provides an electronic device. The electronic device includes a corresponding module configured to perform a step in the embodiment in FIG. 4 or FIG. 13. The module included in the electronic device may be implemented by using software and/or hardware.

An embodiment of this application further provides an electronic device. The electronic device includes a memory and a processor. The memory is configured to store a computer program, and the processor is configured to invoke and execute the computer program, so that the electronic device performs the steps in the embodiment in FIG. 4 or FIG. 13.

This application further provides a chip system. The chip system includes at least one processor, configured to implement functions in the steps in the embodiment in FIG. 4 or FIG. 13.

In a possible design, the chip system further includes a memory. The memory is configured to store program instructions and data. The memory is located inside the processor or outside the processor.

The chip system may include a chip, or may include a chip and another discrete component.

An embodiment of this application further provides a computer-readable storage medium. The computer-readable storage medium stores a computer program, and when the computer program is executed by a computer, the computer is enabled to perform the steps in the embodiment in FIG. 4 or FIG. 13.

An embodiment of this application further provides a computer program product, including a computer program. When the computer program is run, a computer is enabled to perform the steps in the embodiment in FIG. 4 or FIG. 13.

It should be understood that the processor in embodiments of this application may be an integrated circuit chip, and has a signal processing capability. In an implementation process, steps in the foregoing method embodiments may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the apparatus embodiments described above are only examples. For example, the module division is only logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, that is, may be located in one position, or may be distributed on a plurality of network modules. Some or all of the modules may be selected according to actual needs to achieve the objectives of the solutions of embodiments.

In addition, functional modules in embodiments of this application may be integrated into one processing module, each of the modules may exist alone physically, or two or more units may be integrated into one module.

In the foregoing embodiments, all or some of the functions of the functional modules may be implemented by using software, hardware, firmware, or any combination thereof. When software is used to implement the functions, all or some of the functions may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An application interface display method, applied to an electronic device, wherein the method comprises:
entering a landscape hover state in response to a user operation;
obtaining first display content of a target application, wherein the target application is an application running in a foreground, and the first display content is a part or all of content in an interface of the target application before the landscape hover state is entered; and
displaying the first display content in a first area of a screen, wherein the first area is an area that is of the screen and that is located above a center line of a hinge in the landscape hover state, and the hinge is configured to control opening and closing of the screen.

2. The method according to claim 1, wherein the first display content is the part of the content in the interface of the target application before the landscape hover state is entered, and the interface further comprises a related page of the first display content and/or a control for controlling the first display content.

3. The method according to claim 2, wherein the method further comprises:
displaying the control in a second area of the screen, wherein the second area is an area that is of the screen and that is located below the hinge in the landscape hover state; or
displaying a page flip control and one of the control or the related page in a second area of the screen, wherein the page flip control is used to control switching between the control and the related page; or
displaying the related page in a second area of the screen, and displaying the control in the first area of the screen.

4. The method according to claim 2 or 3, wherein the target application comprises an application for playing a video, an application for photographing or image shooting, or an application for an online conference.

5. The method according to any one of claims 1 to 4, wherein a plurality of applications are running in the foreground, the target application is an application that is last operated by a user before the electronic device enters the landscape hover state, and the operation is any operation other than an application exit operation; or
two applications displayed on split screens are running in the foreground, and the target application is an application that is in the two applications and that is located in the first area when the electronic device enters the landscape hover state.

6. The method according to claim 5, wherein the interface is an interface in a preset list, and the preset list comprises an interface identifier and an application identifier corresponding to the interface identifier.

7. The method according to any one of claims 1 to 6, wherein the method further comprises:
when detecting that the electronic device is in a landscape mode and an included angle between a first screen and a second screen is within a preset range, determining that the electronic device is in the landscape hover state, wherein the first screen and the second screen are screens on two sides of the hinge.

8. The method according to any one of claims 1 to 7, wherein before displaying the first display content in the first area of the screen, the method further comprises:
enabling an auto-rotation function when the electronic device is in the landscape hover state and detects that the auto-rotation function of the electronic device is disabled.

9. The method according to claim 8, wherein after displaying the first display content in the first area of the screen, the method further comprises:
disabling the auto-rotation function when detecting that the electronic device exits the landscape hover state, or in response to a disabling operation of the user on the auto-rotation function.

10. An electronic device, comprising a processor and a memory, wherein
the memory is configured to store a computer program; and
the processor is configured to invoke the computer program, to enable the electronic device to perform the method according to any one of claims 1 to 9.

11. A computer-readable storage medium, wherein the computer-readable storage medium stores a computer program, and when the computer program is executed, a computer is enabled to perform the method according to any one of claims 1 to 9.

12. A computer program product, comprising a computer program, wherein when the computer program is run, a computer is enabled to perform the method according to any one of claims 1 to 9.
